# EUROPEAN PATENT SPECIFICATION

(11) **EP 1 998 095 B1**
(45) Date of publication and mention of the grant of the patent: **20.11.2013**
(21) Application number: 08250894.6
(22) Date of filing: 14.03.2008
(51) Int. Cl.: F16L 3/137, F16B 2/10

(54) **Installation method and tool**
Installationsverfahren und Werkzeug
Procédé d'installation et outil

(30) Priority: 04.04.2007 GB 0706534
(43) Date of publication of application: 03.12.2008
(73) Proprietor: Balmoral Comtec Limited, Loriston Aberdeen AB12 3GY (GB)
(72) Inventor: Stokes, Kevan Frederick, Aberdeen, AB12 4QG (GB)
(74) Representative: Crosby, Wendy Agnes

(56) References cited:
- WO-A-98/37355
- GB-A- 2 288 205

## Description

This invention relates to an installation method and a tool, and more particularly to a method of installing a clamp onto a cylindrical member such as a pipeline or riser and a tool for installing a clamp thereon.

Oil and Gas is carried from reservoirs beneath the seabed to the surface by rigid or flexible pipes known as risers. The outer diameter of a riser is subject to significant tolerances due to manufacturing specifications, tension in the riser, internal pressure, hydrostatic pressure and the temperature of the fluids which flow therein. Therefore, the outer diameter of a riser is subject to change along its length due to amongst other things, the hydrostatic pressure of the water surrounding the riser and also the temperature and pressure of the recovered fluids flowing within the riser.

Buoyancy modules are provided upon risers in order to maintain the riser in the required position for optimum use. Known buoyancy modules include C-shaped clamping members which have an internal concave surface which corresponds dimensionally to the outer surface of the riser. A plurality of such members are positioned around the riser and secured in position with a tensioned band such as a titanium strap or a band of aramid fibres such as Kevlar ® or Twaron ® to provide a clamp to which a buoyancy module can be secured.

GB 2288 205 describes a band clamp for securing a buoyancy module to a flexible riser of the type commonly used in the offshore oil and gas industry. The clamp comprises a plurality of clamping members with concave, resiliently deformable inner faces which are shaped to conform to the outer surface of the riser. In use, the clamping members are placed around the outer circumference of the riser and secured in position by an elastically stretchable compression band which sits within grooves in the outer surface of the clamping members.

A tensioning bar is provided at each end of the belt and one or more bolt(s) passes between the two tensioning bars. Tightening of the bolt(s) pulls the ends of the band together thereby stretching the compression band to cause the band to exert a compressive clamping force on the clamping members and on the riser.

The radial force exerted by the clamping members on the riser is of sufficient magnitude to resist axial movement of the clamping members with respect to the riser by virtue of a friction grip. The load applied to the belt and transferred thereby to the clamping members is applied tangentially of the riser, i.e. by drawing together the two tensioning bars.

This results in an uneven load distribution around the riser. Such an imbalance in the load distribution is unavoidable as the inner face of the camp cannot rotate around the riser once tensioning of the belt has commenced and the tensioned portion of the clamp body will stretch hoop wise as it is tensioned. The clamp body will also be compressed to some extent which enhances this disproportionate loading effect.

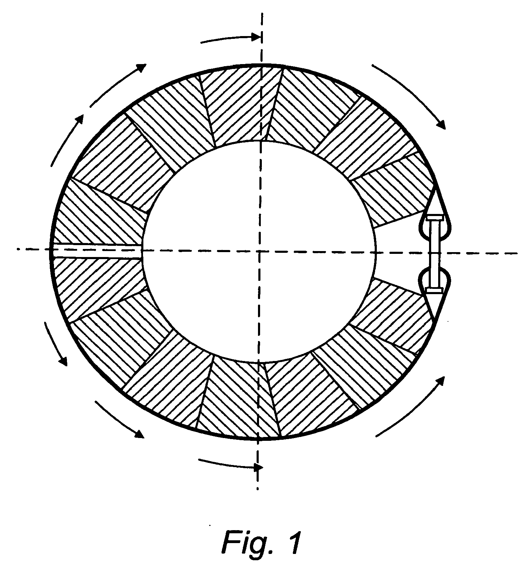

The result of this is a shear stress within the clamp body or across an interface of the body as the outer surface of the clamp is being pulled in one direction whilst the inner surface is resisting movement in that same direction. This shear stress varies from a maximum at the tensioning point to a minimum at a point diametrically opposite. This is known as the Capstan effect and is shown diagrammatically in Figure 1. Load that is dispersed in this way makes no contribution to the clamping force applied to the clamping members and so it is necessary to increase the applied tension to the compression band to compensate for the force losses which are attributed to this effect.

The disadvantages of increasing the applied load include that stronger components are required for the clamps as a higher force has to be exerted by the compression band, the pressure applied to the riser will be unevenly distributed around the circumference of the riser and such a stronger clamp will by necessity have to be stiffer to withstand the additional forces which reduces the capacity of the clamp to accommodate changes in the diameter of the riser.

The capstan effect can be reduced by increasing the number of tensioning points around the clamp. In some cases, four clamping points are provided which should, in theory at least, reduce the capstan effect by 75%. However, this theoretical reduction can only be achieved if all four tensioning points are equally and evenly tensioned. In practice this tends to be a very slow and unreliable process.

WO 98/37355 describes a clamping component for attachment to the external surface of a riser and comprises a plurality of inner clamping members which are mounted around the outer surface of the riser, and a plurality of outer clamping members, each outer clamping member being mounted over an inner clamping member. Bolts are provided between the ends of the outer clamping members such that tightening of the bolts forces the outer clamping members against the inner clamping members to clamp the inner clamping members against the outer surface of the riser.

As discussed above, this results in an uneven load distribution around the riser.

The present invention aims to provide an installation tool for a clamp which overcomes or at least mitigate the above mentioned problems.

It is a further object of the present invention to provide a method of installing a clamp onto a pipeline or riser which mitigates the imbalanced loading which results from the known installation method.

According to a first aspect of the present invention there is provided a tool for installing a clamp comprising a plurality of clamp components onto a tubular member said tool comprising means for simultaneously applying a radial load to each component of the clamp before said clamp is secured to the tubular member.

Preferably the means for applying a radial load is adapted to apply the load uniformly around the clamp.

Preferably the means for applying a radial load to the clamping components is a hydraulic actuator.

Preferably the hydraulic actuator is a hydraulic ram.

In one embodiment a separate hydraulic ram is provided for each clamping component.

Preferably the tool further comprises a frame upon which the radial load means are carried.

Conveniently the frame comprises means for securing each clamping component prior to application to a tubular member.

Advantageously the frame comprises two frame members hinged together to allow the frame to be placed around a tubular member.

According to a further aspect of the present invention there is provided a method of installing a clamp on a tubular member, the clamp comprising a plurality of clamping components, the method comprising the steps of placing the clamp around the tubular member, characterised in that the method further comprises the steps of mounting the clamp within a tool according to the first aspect of the invention and applying a radial load from the tool to each clamping component simultaneously and subsequently securing the loaded clamp to the tubular member.

Embodiments of the present invention will now be described with reference to the accompanying drawings in which:-
Fig. 1 is a schematic cross section of a clamp showing the shear forces resulting from known methods of tensioning the compressive band around the clamping components;
Fig. 2 is a perspective view of an installation tool according to one aspect of the present invention in an opened condition prior to placing the clamping components onto a tubular member, and
Fig. 3 is a schematic plan view of the tool of Fig. 2 with the clamping components removed, and
Fig. 4 is a schematic plan view of the tool of Fig. 2 with the clamping components in place.

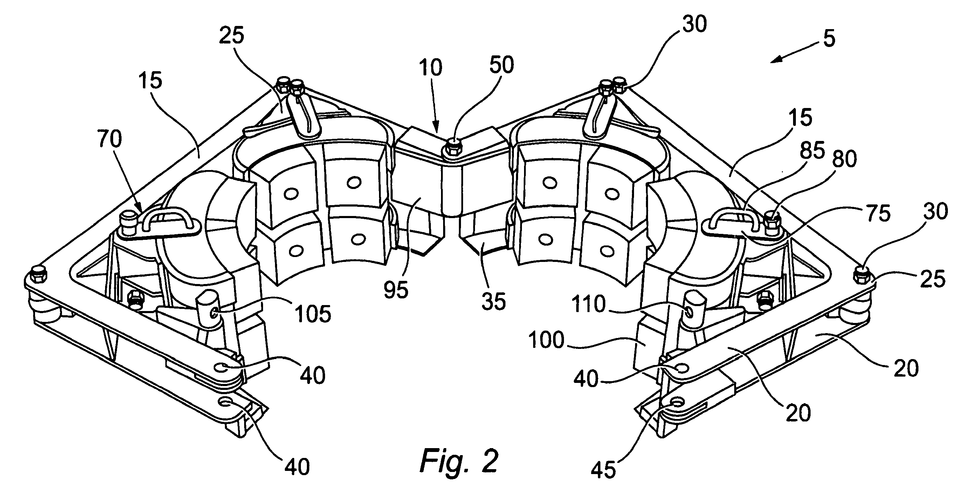

Turning now to Fig. 2 of the drawings, there is shown an installation tool 5 which comprises a frame 10 which in the preferred embodiment is formed of two substantially C-shaped frame elements 15. The frame may be formed from any suitable material such as aluminium, plastics, aluminium alloys, carbon steel or stainless steel, or reinforced composite materials. Aluminium and aluminium alloys plus composites offer simultaneous advantages of low weight and corrosion resistance. Where necessary such as if the frame or any components thereof are formed from a material which is corrosive in an off-shore environment, or operation of the frame is required sub-sea, the frame or the components may be coated with an anti-corrosive or other protective coating.

Each frame element is comprised of upper and lower frame members 20 which are secured together in the corners 25 via connectors such as bolts 30 which will be described further below. The lower frame members are provided with a flange 35 which extends substantially parallel to the lower frame member and extends into the centre of the frame.

The free ends 40 of the upper and lower frame members are provided with aligned apertures 45. A connector 50 which may be a further bolt passes through one set of the aligned apertures as shown in Figure 2 in order to hingedly connect the two frame elements together.

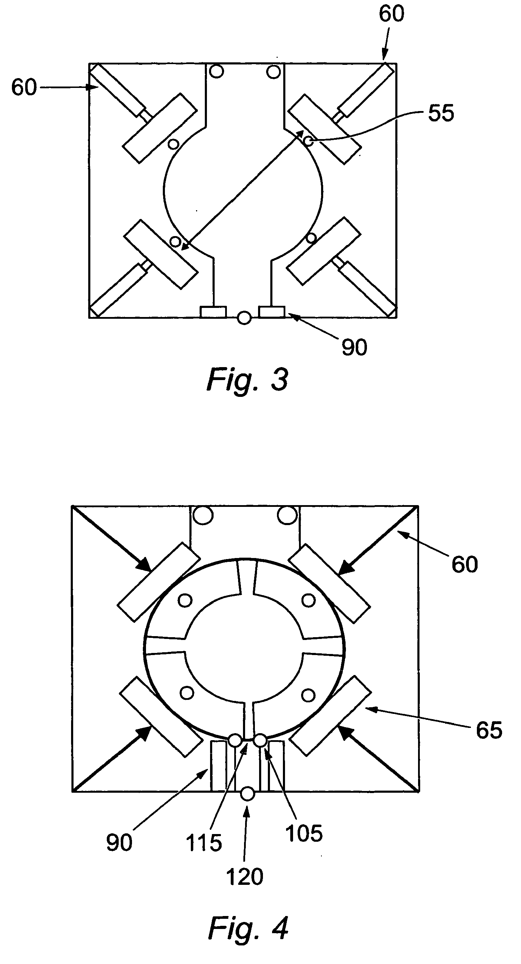

Mounting means are provided for securing a plurality of clamping components with the frame prior to installation upon a tubular member. The mounting means comprises a suction pad 55 provided on the flange 35 of the lower frame component. A suction pad is provided for each clamping component and therefore in the embodiment shown in Figs 2-4, four suction pads are provided. The suction pads are mounted on the flange diametrically opposite the corners 25 of the frame elements.

An actuator 60 which may preferably be a hydraulic actuator such as a hydraulic ram is mounted in each corner of the frame elements. One end of the hydraulic ram is secured to the frame elements 15. In the embodiment shown, the end of the hydraulic ram adjacent the frame element is bolted to the upper and lower frame members through bolt 30 such that the hydraulic rams extend diametrically from the corners 25 of the frame elements.

A reaction pad 65 is mounted on the free end of the hydraulic actuators 60. Securing means 70 are provided on the upper surface of the reaction pads for providing additional stability to the clamping components. The securing means comprises a bar 75 securable to the reaction pads via a bolt or screw 80. The upper surface of the bar has a handle 85 for ease of operation. In some embodiments of the invention, the securing means may replace the suction pads or in some embodiments may be dispensed with.

Reaction pads 90 may also be provided in the frame adjacent the opening of the frame elements, the function of which will be further described below.

In the embodiment shown, four clamp components are mounted in the frame at 80° and 100° respectively on each frame element rather than at 90° and 90° although other numbers of clamp components and other mounting positions are equally envisaged.

A method of installing a clamp on a riser using the installation tool described in Fig. 2 will now be described.

In the embodiment shown, four arcuate clamping components are mounted into the frame. The size of the clamp and therefore the clamping components is chosen to suit the outer diameter of the riser to which the clamp is to be fitted. Each clamping component has an internal concave surface which is provided with a resilient member which is preferably rubber.

Each clamping component is mounted onto a suction pad 55 on the flange 35 of the lower frame member 20. In embodiments in which a further securing means is provided, the bar 75 of the securing means is attached to the upper surface of the reaction pad 65 mounted on each hydraulic actuator 60. The bar extends over the upper surface of the clamping component and is tightened into position on top of the clamping component.

A compression band 95 preferably formed of a resilient material such as titanium or aramid fibres such as Kevlar ®or Twaron ® is mounted around the clamp components, the band being retained in a groove in the exterior surface of the components.

A loop 100 is provided at each end of the band and a rod 105 passes vertically through each end loop. Each rod has upper and lower aligned apertures 110 to receive a bolt 115 to connect the two ends of the band together. Reaction pads 90 are mounted adjacent the free ends 40 of the frame elements to provide assist in the tightening operation of the bolts through the bars.

The frame 5 of the installation tool is hinged open to allow the clamping components to be mounted within the frame. Each component is secured to the mounting means with the inner concave surface facing towards the centre of the frame.

The frame is then hinged closed around the riser at the appropriate height where it is intended to mount the clamp. Closing of the frame brings the two ends of the compression band 95 towards each other. A bolt, pin, latch or other securing means 120 is then inserted through the apertures in the free ends of the frame to hold the frame securely in position on the riser.

The hydraulic actuators 60 are then actuated to simultaneously push the clamping components forwards against the outer surface of the riser. The radial force that is applied by the actuators is slightly higher than required for clamping purposes and this load is then held until the one or more tightening bolts 115 of the compression band is fitted to connect the two ends of the band together. The band is then tensioned by rotation of the tightening bolt against the reaction pads 90 either by hand or using a torque tool on a minimal torque setting.

The hydraulic actuators are then withdrawn to release the clamping components as the actuators withdraw.

The clamping components are then disengaged from the retaining means and bolt 120 connecting the free ends of the frame elements together is removed such that the frame 10 can be hinged opened and released from the riser leaving the tensioned clamp in position around the riser.

By releasing the radial load on the components after final tightening of the compression band 95, this allows the compression band to be more evenly tensioned in an efficient manner. Consequently the clamping force is more evenly distributed and of a more reliable magnitude than is otherwise the case.

It will be readily appreciated that the installation tool and the method of installing a clamp using the tool as described allows a balanced uniform load to be radially applied to all clamping components simultaneously.

The radial load which can be applied to the resilient inner surface of the clamping components is significantly greater than is possible with known installation methods due to the high shear stresses which are created upon tightening of the compression bands using standard techniques. This is particularly important as the current trends in insulated, flexible flowlines call for clamps that can accommodate substantial radial contraction of the riser whilst maintaining clamping performance without unacceptable stressing of the flowline and clamping components. One embodiment of the present invention provides a clamp which can withstand a 5% radial strain such as a 16mm diameter change on an 320 mm outer diameter riser. Further embodiments may be provided to withstand upto 10% radial change in the diameter of a riser.

Whilst the installation tool of the present invention has been described in relation to a 4 piece clamp, it is envisaged that other numbers of clamp components may be used. It is however preferable that an even number of clamping elements are provided although this is not essential.

The clamping components should be similar and symmetrical with respect to a pair of mutually perpendicular axes for balanced loading. However radial symmetry is not essential.

Additionally, whilst two symmetrical frame members have been described in the embodiment above, the frame may be formed of some other number of frame members for example 3 frame members may be preferable with two hinges where 3, 5 or 6 clamping components are used.

Furthermore, whilst the main embodiment has hydraulic rams applying the radial load to the clamp components, other actuators may be substituted such as pneumatic or mechanical actuators.

In the main embodiment the actuators are described as applying a force to the clamp components simultaneously. It is also envisaged that the actuators may be operated to apply a force to the clamp components sequentially.

In a further embodiment, the clamp components may be loaded into the frame in a closed position such as by dropping the components into place from above.

Whilst the routine use of the present invention will be on a reel-ship, lay-barge/semi - sub, lay-ship or floating platform, it is envisaged that the installation tool may be operated subsea. The installation too may be operated either manually, for example by divers who can adjust the position of the frame upon the riser, actuate the radial load means, tension the compression belt and remove the frame. Alternatively, the installation tool may be adapted for automated operation for example via an ROV or via a power cable operated from the surface.

The band described above may be replaced by a Titanium strap with axis bars mounted on either end, for example via a welding operation. The ends of the strap are brought together and bolts passed through apertures in the bars to tension the strap.

It will be readily apparent that a particular size of frame will be able to hold a range of sizes of clamp components and therefore it will be possible to mount several differently sized clamps onto differently sized risers using the same frame. This makes the installation tool a commercially attractive product. Furthermore, when not in use, the frame is easily stored and equally easily portable from one location to another.

The present invention is described as being suitable for locating buoyancy modules on risers but it should be appreciated that the tool could equally be used in other applications where it is necessary to mount a clamp upon a tubular element and pre-loading of the clamp before securing a compression band would give the same advantages as described above.

## Claims

1. A tool (5) for installing a clamp comprising a plurality of clamp components onto a tubular member said tool comprising means for simultaneously applying a radial load to each component of the clamp before said clamp is secured to the tubular member.

2. A tool according to claim 1, wherein the means for applying a radial load is adapted to apply the load uniformly around the clamp.

3. A tool according to any of claims 1 or 2, wherein the means for applying a radial load to the clamping components is a hydraulic actuator (60).

4. A tool according to claim 3, wherein the hydraulic actuator is a hydraulic ram.

5. A tool according to claim 4, wherein a separate hydraulic ram is provided for each clamping component.

6. A tool according to any one of claims 1-5, wherein the tool further comprises a frame (10) upon which the radial load means are carried.

7. A tool according to claim 6, wherein the frame comprises means (55) for securing each clamping component prior to application to a tubular member.

8. A tool according to claim 6 or 7, wherein the frame comprises two frame members (15) hinged together to allow the frame to be placed around a tubular member.

9. A method of installing a clamp on a tubular member, the clamp comprising a plurality of clamping components, the method comprising the steps of mounting the clamp within a tool according to any of claims 1-8, placing the clamp around the tubular member, and applying a radial load from the tool to each clamping component simultaneously and subsequently securing the loaded clamp to the tubular member.

## Patentansprüche

1. Ein Werkzeug (5) zum Installieren einer Klemme, eine Vielzahl von Klemmenkomponenten beinhaltend, auf einem röhrenförmigen Element, wobei das Werkzeug Mittel zum simultanen Aufbringen einer Radiallast auf jede Komponente der Klemme, bevor die Klemme an dem röhrenförmigen Element gesichert wird, beinhaltet.

2. Werkzeug gemäß Anspruch 1, wobei das Mittel zum Aufbringen einer Radiallast angepasst ist, um die Last einheitlich um die Klemme herum aufzubringen.

3. Werkzeug gemäß einem der Ansprüche 1 oder 2, wobei das Mittel zum Aufbringen einer Radiallast auf die Klemmenkomponenten ein hydraulischer Antrieb (60) ist.

4. Werkzeug gemäß Anspruch 3, wobei der hydraulische Antrieb ein Hydraulikzylinder ist.

5. Werkzeug gemäß Anspruch 4, wobei für jede Klemmenkomponente ein separater Hydraulikzylinder bereitgestellt wird.

6. Werkzeug gemäß einem der Ansprüche 1-5, wobei das Werkzeug ferner einen Rahmen (10) beinhaltet, auf dem die Radiallastmittel getragen werden.

7. Werkzeug gemäß Anspruch 6, wobei der Rahmen Mittel (55) zum Sichern jeder Klemmenkomponente vor der Aufbringung auf ein röhrenförmiges Element beinhaltet.

8. Werkzeug gemäß Anspruch 6 oder 7, wobei der Rahmen zwei scharnierartig miteinander verbundene Rahmenelemente (15) beinhaltet, um zu ermöglichen, dass der Rahmen um ein röhrenförmiges Element herum platziert wird.

9. Ein Verfahren zum Installieren einer Klemme auf einem röhrenförmigen Element, wobei die Klemme eine Vielzahl von Klemmenkomponenten beinhaltet, wobei das Verfahren die folgenden Schritte beinhaltet: Montieren der Klemme innerhalb eines Werkzeugs gemäß einem der Ansprüche 1-8, Platzieren der Klemme um das röhrenförmige Element herum und simultanes Aufbringen einer Radiallast von dem Werkzeug auf jede Klemmenkomponente und anschließend Sichern der belasteten Klemme an dem röhrenförmigen Element.

## Revendications

1. Un outil (5) pour installer un collier de serrage comprenant une pluralité de composants de collier de serrage sur un élément tubulaire ledit outil comprenant des moyens pour appliquer simultanément une charge radiale sur chaque composant du collier de serrage avant que ledit collier de serrage soit assujetti sur l'élément tubulaire.

2. Un outil selon la revendication 1, dans lequel le moyen pour appliquer une charge radiale est conçu pour appliquer la charge de façon uniforme autour du collier de serrage.

3. Un outil selon n'importe lesquelles des revendications 1 ou 2, dans lequel le moyen pour appliquer une charge radiale sur les composants de serrage est un actionneur hydraulique (60).

4. Un outil selon la revendication 3, dans lequel l'actionneur hydraulique est un vérin hydraulique.

5. Un outil selon la revendication 4, dans lequel un vérin hydraulique distinct est prévu pour chaque composant de serrage.

6. Un outil selon n'importe laquelle des revendications 1 à 5, l'outil comprenant en outre un cadre (10) sur lequel sont portés les moyens de charge radiale.

7. Un outil selon la revendication 6, dans lequel le cadre comprend un moyen (55) pour assujettir chaque composant de serrage avant l'application sur un élément tubulaire.

8. Un outil selon la revendication 6 ou la revendication 7, dans lequel le cadre comprend deux éléments de cadre (15) articulés ensemble pour permettre au cadre d'être placé autour d'un élément tubulaire.

9. Un procédé pour installer un collier de serrage sur un élément tubulaire, le collier de serrage comprenant une pluralité de composants de serrage, le procédé comprenant les étapes consistant à monter le collier de serrage au sein d'un outil selon n'importe lesquelles des revendications 1 à 8, placer le collier de serrage autour de l'élément tubulaire, et appliquer une charge radiale depuis l'outil sur chaque composant de serrage simultanément et assujettir par la suite le collier de serrage chargé sur l'élément tubulaire.
